# EUROPEAN PATENT SPECIFICATION

(11) **EP 4 534 847 B1**
(45) Date of publication and mention of the grant of the patent: **28.10.2026**
(21) Application number: 24826860.9
(22) Date of filing: 16.04.2024
(51) Int. Cl.: F04C 18/02, F04C 28/24, F04C 28/28, F16K 17/04, F04C 23/00

(54) **SCROLL COMPRESSOR**
SPIRALVERDICHTER
COMPRESSEUR À SPIRALE

(30) Priority: 30.06.2023 CN 202310798743
(43) Date of publication of application: 09.04.2025
(73) Proprietor: Bitzer Refrigeration Technology (China) Co., Ltd., Beijing 100176 (CN)
(72) Inventor: PEI, Junliang, Beijing 100176 (CN); MIAO, Qing, Beijing 100176 (CN)
(74) Representative: Westphal, Mussgnug & Partner Patentanwälte mbB
(86) International application number: PCT/CN2024/088035
(87) International publication number: WO 2025/001437

(56) References cited:
- EP-A1- 3 339 646
- EP-A1- 3 851 675
- CN-U- 204 061 180
- CN-U- 211 230 821
- CN-U- 218 030 640
- CN-U- 220 378 486
- JP-A- 2013 019 322
- JP-A- 2013 019 322
- US-A1- 2018 038 370

## Description

The present disclosure claims priority to Chinese Patent Application No. 202310798743.7, titled "SCROLL COMPRESSOR", filed on June 30, 2023 with the National Intellectual Property Administration, PRC.

### FIELD

The present disclosure relates to the technical field of compressors, and in particular to a scroll compressor.

### BACKGROUND

As a typical structure of compressors, the scroll compressor is mainly used in air conditioning, refrigeration, general gas compression, as well as in conditions such as automotive engine superchargers and vacuum pumps. The scroll compressor can replace a large range of conventional small and medium-sized reciprocating compressors.

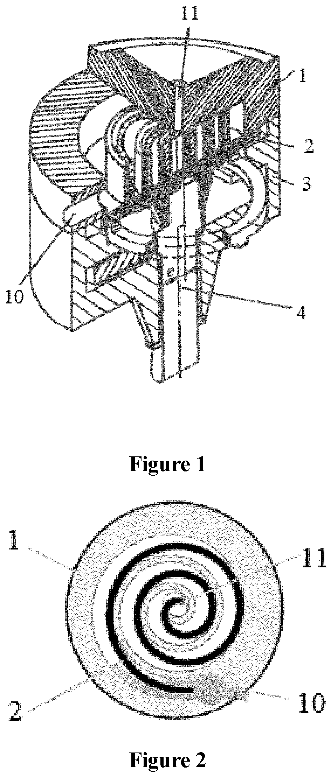

Referring to Figures 1 and 2, a typical structure of the scroll compressor includes at least a fix scroll 1, an orbiting scroll 2, and a body 3. Both the fix scroll 1 and the orbiting scroll 2 have scroll shaped blades, which are meshed with each other at an interlocked angle of 180°. The orbiting scroll 2 is driven by an eccentric shaft 4 with a small eccentricity, and is constrained by an anti-rotation mechanism to perform a planar motion around the fix scroll 1 with a small radius, so as to form a series of crescent shaped cylindrical volumes in conjunction with the end plate.

During one revolution of the eccentric shaft 4, the three operation processes of intake, compression, and exhaust of the scroll compressor are performed simultaneously. An intake port 10 is connected to the outer space and the intake process is always performed, an exhaust hole 11 is connected to the inner space and the exhaust process is always performed, and the exhaust hole 11 faces toward an axial direction of the fix scroll 1.

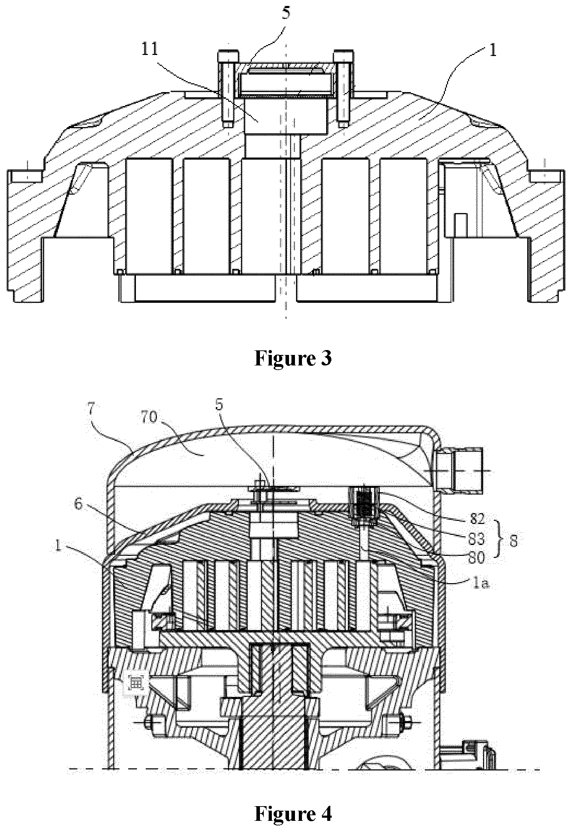

Referring to Figure 3, the scroll compressor further includes an exhaust valve. The exhaust valve 5 includes an exhaust valve back plate and an exhaust washer. The exhaust valve back plate is fixedly connected to a position of the exhaust hole 11 of the fix scroll 1 by screws, and there is an axial gap between the exhaust valve back plate and the exhaust hole 11. The exhaust washer is located within the axial gap and is configured to block the exhaust hole 11 under an action of internal and external pressure difference during the operation processes of intake and compression, and leave the fix scroll 1 under the action of internal and external pressure difference during the operation process of exhaust and then is stopped by the exhaust valve back plate. In this case, the exhaust hole 11 is opened, and the compressed high-temperature and high-pressure medium is discharged from the exhaust hole 11 until the external pressure is greater than the internal pressure, then the exhaust washer falls back and resets under its own weight and/or pressure difference, and blocks the exhaust hole 11 again.

The scroll compressor further includes an upper cap, which is fixedly connected to the fix scroll 1 and forms an exhaust chamber with the fix scroll. The upper cap is provided with a through hole. In a case that the scroll compressor is in an exhaust condition, the exhaust washer is pushed to open the medium exhaust hole. The compressed high-temperature and high-pressure medium flows through the medium exhaust hole and the medium hole in sequence into the exhaust chamber, and finally flows into an external pipeline through a check valve connected to the exhaust chamber on the upper cap.

The high pressure in the exhaust chamber directly applies on the fix scroll 1. The greater this action force, the greater the deformation of the scroll blade of the fix scroll 1, which is more detrimental to the performance and reliability of the fix scroll 1.

Prior art document US2018038370A1 discloses a compressor including a shell, first and second scroll members, a partition plate and a bypass valve member. The partition plate is disposed within the shell and separates the discharge-pressure region from the suction-pressure region and includes an opening in communication with the discharge-pressure region. The bypass valve member is movable between a first position restricting fluid flow through at least one of the first and second bypass passages and the opening and a second position in allowing fluid flow through the at least one of the first and second bypass passages and the opening.

Prior art document EP3339646A1 discloses a scroll compressor capable of inhibiting occurrence of pulsation of a fluid. The scroll compressor includes: an on/off valve that opens when the capacity control operation of a fluid is turned on, and returns a mid-compression fluid, which is discharged to an intermediate chamber, to a suction chamber; and a second check valve that opens when the capacity control operation is turned off and when a pressure in the intermediate chamber becomes higher than a pressure in a discharge chamber, and discharges the mid-compression fluid, which is discharged to the intermediate chamber, to the discharge chamber via a discharge port. Further relevant scroll compressors are known from EP 3 851 675 A1 and JP 2013 019322 A.

In view of this, those skilled in the art need to find a method to solve the problem in the conventional scroll compressor that the fix scroll is deformed due to the pressure in exhaust chamber applied to the fix scroll.

### SUMMARY

A scroll compressor is provided according to the present disclosure, to solve the problems in the conventional art.

The scroll compressor provided according to the present disclosure includes: a fix scroll, an orbiting scroll, a pressure partition plate, an upper cap, and a pressure relief valve. The orbiting scroll is configured to cooperate with the fix scroll to form a compression chamber with a variable volume. The pressure partition plate is arranged on the fix scroll. The upper cap is connected to the pressure partition plate to form an exhaust chamber. The pressure relief valve is arranged on the pressure partition plate and configured to connect the compression chamber with the exhaust chamber in a case that a pressure in the compression chamber exceeds an exhaust pressure. The pressure relief valve includes a pressure relief valve back plate, a pressure relief washer, and a reset spring pre-compressed between the pressure relief valve back plate and the pressure relief washer. The pressure relief washer is configured to overcome an elastic force of the reset spring and connect with the compression chamber with the exhaust chamber in a case that the pressure in the compression chamber exceeds the exhaust pressure. The pressure relief valve back plate is further provided with a reset hole connected with the exhaust chamber, and the reset hole is configured to guide the pressure in the exhaust chamber to the pressure relief washer in a case that the pressure in the compression chamber does not exceed the exhaust pressure, to reset the pressure relief washer.

In an embodiment, the scroll compressor further includes a connecting piece. The connecting piece is provided with an auxiliary exhaust hole, and the auxiliary exhaust hole of the connecting piece is connected with the compression chamber, and the connecting piece passes through the pressure partition plate and is connected with the exhaust chamber. The pressure relief valve is configured to open or close the auxiliary exhaust hole of the connecting piece based on a relationship between the pressure in the compression chamber and the exhaust pressure.

In an embodiment, the pressure relief valve includes a pressure relief washer, and the pressure relief washer is configured to open the auxiliary exhaust hole of the connecting piece in a case that the pressure in the compression chamber exceeds the exhaust pressure, and close the auxiliary exhaust hole of the connecting piece in a case that the pressure in the compression chamber does not exceed the exhaust pressure.

In an embodiment, the pressure relief valve further includes a pressure relief valve plate, the pressure relief valve plate is arranged on the pressure partition plate and has a through hole, the auxiliary exhaust hole is connected with the exhaust chamber through the through hole, and the pressure relief washer is configured to open or close the through hole.

In an embodiment, the pressure relief valve plate is integrally formed with the pressure partition plate.

In an embodiment, the connecting piece is integrally formed with the fix scroll.

In an embodiment, the scroll compressor further includes a connecting piece. The connecting piece is provided with an auxiliary exhaust hole, the auxiliary exhaust hole of the connecting piece is configured to connect the auxiliary exhaust hole of the fix scroll with the auxiliary exhaust hole of the pressure partition plate, the auxiliary exhaust hole of the fix scroll is connected with the compression chamber, and the auxiliary exhaust hole of the pressure partition plate is connected with the exhaust chamber. The pressure relief valve is configured to open or close the auxiliary exhaust hole of the pressure partition plate based on a relationship between the pressure in the compression chamber and the exhaust pressure.

In an embodiment, the connecting piece is integrally formed with the fix scroll or the pressure partition plate.

One of the beneficial effects of the scroll compressor of the present disclosure is that the pressure relief valve of the scroll compressor of the present disclosure is arranged on the pressure partition plate, and the high pressure in the exhaust chamber directly applies on the pressure partition plate, rather than directly applying on the fix scroll, thereby reducing the action force on the fix scroll and in turn reducing the risk of deformation of the scroll blade of the fix scroll, thus ensuring the service life, performance, and reliability of the fix scroll.

### BRIEF DESCRIPTION OF THE DRAWINGS

In order to clearly describe the technical solution of the embodiments of the present disclosure, a brief description will be given below to the drawings required for the embodiments. It should be understood that the following drawings only illustrate certain embodiments of the present disclosure and should not be considered as limiting the scope. For those skilled in the art, other relevant drawings may be obtained based on these drawings without any creative work.
Figure 1 is a schematic sectional view of a partial structure of a scroll compressor;
Figure 2 is a schematic diagram of a structure in a case that the fix scroll and the orbiting scroll are meshed with each other;
Figure 3 is a schematic sectional view of a structure of a conventional assembly of a fix scroll and an exhaust valve along an axial direction;
Figure 4 is a schematic sectional view of a partial structure of a scroll compressor according to an embodiment of the present disclosure;
Figure 5 is a schematic sectional view of a partial structure of the scroll compressor according to an embodiment of the present disclosure along an axial direction; and
Figure 6 is a schematic sectional view of a partial structure of the scroll compressor according to an embodiment of the present disclosure along an axial direction.

The one-to-one correspondence between names and the reference numbers of components in Figures 1 to 6 is described as follows:
1. Fix scroll; 10. Intake port; 11. Exhaust hole; 2. Orbiting scroll; 3. Body; 4. Eccentric shaft; 5. Exhaust valve; 6. Pressure partition plate; 7. Upper cap; 70. Exhaust chamber; 8. Pressure relief valve; 80. Pressure relief washer; 81. Pressure relief valve plate; 82. Pressure relief valve back plate; 820. Pressure relief exhaust hole; 821. Reset hole; 83. Reset spring; 9. Connecting piece; 1a. Auxiliary exhaust hole.

### DETAILED DESCRIPTION OF EMBODIMENTS

Various exemplary embodiments of the present disclosure will now be described in detail with reference to the drawings. It should be noted that the relative arrangement of the components and steps, numerical expressions, and values described in these embodiments do not limit the scope of the present disclosure unless otherwise specified.

The following description of at least one exemplary embodiment is merely illustrative and should not be construed as any limitation on the present disclosure or its application or use.

The techniques, methods, and devices known to those skilled in the art may not be described in detail, but in appropriate circumstances, such techniques, methods, and devices should be considered as a part of the specification.

In all the examples shown and described herein, any specific value should be interpreted as merely illustrative rather than restrictive. Therefore, different values may be used for other examples in the exemplary embodiments.

It should be noted that similar labels and characters represent similar items in the figures. Therefore, once an item is defined in one figure, such item does not need to be further described in subsequent figures.

A scroll compressor is provided according to the present disclosure, which includes a fix scroll, an orbiting scroll, a pressure partition plate, an upper cap, an exhaust valve, and a pressure relief valve. The orbiting scroll is configured to cooperate with the fix scroll to form a compression chamber with a variable volume. The pressure partition plate is arranged on the fix scroll. The upper cap is connected to the pressure partition plate to form an exhaust chamber. The exhaust valve is configured to connect the compression chamber with the exhaust chamber in a case that an exhaust pressure of the compressor is reached. The pressure relief valve is arranged on the pressure partition plate and is configured to connect the compression chamber with the exhaust chamber in a case that the pressure in the compression chamber exceeds the exhaust pressure.

It should be noted that the "medium" herein refers to gases or liquids that may be compressed by a compressor, such as compressed gases, refrigerants. In addition, the exhaust pressure indicates that a pressure in the compression chamber reaches a set pressure allowing for normally exhausting gases to the exhaust chamber, or indicates that a pressure in the compression chamber is in a state that can push the exhaust washer of the exhaust valve, to connect the compression chamber with the exhaust chamber via the exhaust valve, so that the scroll compressor is in a normal exhaust stroke. The exhaust pressure may be a specific value or a value range, depending on factors such as the swept volume of the scroll compressor.

The operating principle of the scroll compressor is described as follows. The orbiting scroll rotates eccentrically around the fix scroll, and the volume of the compression chamber formed by meshing the orbiting scroll and the fix scroll increases on the side of the medium intake hole, creating an internal and external pressure difference of the compression chamber. The medium to be compressed is took into the compression chamber through the medium intake hole, the volume of the compression chamber where the medium is located does not gradually decrease as the orbiting scroll continues to rotate around the fix scroll, so that the medium is compressed. Under the intake and compression conditions, the exhaust valve is always at a position blocking the medium discharge hole and discharge passage. As the temperature and the intensity of pressure of the medium in the compression chamber gradually increase, the exhaust valve connects the medium discharge hole and discharge passage. The high-temperature and high-pressure medium is discharged from the compression chamber through the medium discharge hole and discharged into the exhaust chamber through the discharge passage. Finally, the medium is inputted into devices that use compressed medium such as an air conditioner, through an external pipeline.

In a case that the pressure in the compression chamber of the scroll compressor exceeds the exhaust pressure of the compressor, the pressure relief valve opens the auxiliary exhaust hole under a high pressure, and the compression chamber automatically releases pressure to the exhaust chamber through the auxiliary exhaust hole. The pressure in the compression chamber drops back to near the exhaust pressure, and then the pressure relief valve returns to its original state and closes the auxiliary exhaust hole. The pressure ratio in the compressor decreases and the volume ratio in the compressor changes accordingly to meet the operational needs of the compressor, effectively preventing over compression in the compression chamber of the scroll compressor.

In the conventional technology, the pressure relief valve of the scroll compressor is arranged on the fix scroll, and an upper part of the fix scroll is located in the exhaust chamber. The pressure in the exhaust chamber directly applies on the fix scroll, which can easily cause deformation of the scroll blade of the fix scroll, thereby affecting the performance of the fix scroll.

Compared to the above, in the scroll compressor of the present disclosure, the pressure relief valve is arranged on the pressure partition plate, and a high pressure in the exhaust chamber directly applies on the pressure partition plate, rather than directly applying on the fix scroll, thereby reducing the action force on the fix scroll and in turn reducing the risk of deformation of the scroll blade of the fix scroll, thus ensuring the service life, performance, and reliability of the fix scroll.

For ease of understanding, the specific structure and operating principle of the scroll compressor of the present disclosure will be described in detail with reference to Figures 4 to 6 in combination with specific embodiments.

Referring to Figure 4, in this embodiment, the scroll compressor includes a fix scroll 1, an orbiting scroll 2, a body 3, an exhaust valve 5, a pressure partition plate 6, and an upper cap 7.

The body 3 usually has a shell structure with a thin-wall, and its internal space is sufficient to accommodate the fix scroll 1, the orbiting scroll 2, and the driving mechanism that drives the orbiting scroll 2 to rotate around the fix scroll 1.

Both the fix scroll 1 and the orbiting scroll 2 have scroll shaped blades, which are meshed with each other at an interlocked angle of 180°. The orbiting scroll 2 is driven by a crankshaft with a small eccentricity, and is constrained by an anti-rotation mechanism to perform a planar motion around the fix scroll 1 with a small radius, so as to form a series of crescent shaped cylindrical volumes in conjunction with the end plate.

It should be noted that the specific structure and mutual assembly relationship of the fix scroll 1, the orbiting scroll 2, and the body 3 may be realized by those skilled in the art through the conventional art, and will not be repeated herein.

Continually referring to Figure 4, in the embodiment, the pressure partition plate 6 is fixedly connected to the fix scroll 1, usually in a manner of welding. However, on the basis of meeting the requirements of manufacturing and assembling, the pressure partition plate 6 may also be fixedly connected to the fix scroll 1 through fasteners such as screws, and other manners such as riveting, or bonding.

The pressure partition plate 6 is provided with a through hole, the through hole is connected with the medium discharge hole of the fix scroll 1, and the through hole and the medium discharge hole are basically coaxial and have the same radius. In this way, the risk of detachment at the connection area between the pressure partition plate 6 and the fix scroll 1 due to the pressure on the pressure partition plate 6 when high-temperature and high-pressure medium is discharged from the compression chamber can be avoided.

A surface of the fix scroll 1 cooperating with the pressure partition plate 6 is provided with a sealing ring groove that surrounds the medium discharge hole. An elastic sealing ring is pressed in the sealing ring groove to achieve stationary sealing between the fix scroll 1 and the pressure partition plate 6, thereby preventing the compressed high-temperature and high-pressure medium from leaking from the surface of the fix scroll 1 cooperating with the pressure partition plate 6.

The upper cap 7 and the pressure partition plate 6 are fixedly connected by welding, bonding, or using fasteners such as screws to form an exhaust chamber 70.

The upper cap 7 is provided with a discharge port connected with the exhaust chamber 70, and the discharge port is connected with an external pipeline. Usually, a check exhaust valve (not shown in the figure) is further arranged on the external pipeline, which is used to prevent refrigerant in the device pipeline of the air conditioner from returning to the scroll compressor, that is, to avoid the commonly called "refrigerant migration".

The exhaust valve 5 is arranged on the outer surface of the pressure partition plate 6 and is located in the exhaust chamber 70. It should be noted that the directional terms "inside" and "outside" are used herein with reference to the compression chamber, with the inside is a side closer to the compression chamber on the scroll compressor and the outside is a side farther away from the compression chamber on the scroll compressor. The exhaust valve 5 is configured to connect the compression chamber with the exhaust chamber in a case that the exhaust pressure of the compressor is reached.

The pressure relief valve 8 is arranged on the pressure partition plate 6 and is configured to connect the compression chamber with the exhaust chamber 70 in a case that the pressure in the compression chamber exceeds the exhaust pressure.

In this way, in a case that the pressure in the scroll compression chamber exceeds the discharge pressure of the compressor, under the action of the high pressure, the pressure relief valve 8 opens the auxiliary exhaust hole 1a, and the compression chamber automatically releases the pressure to the exhaust chamber 70 through the auxiliary exhaust hole 1a. The pressure in the compression chamber drops back to near the discharge pressure, then the pressure relief valve 8 returns to its original state and closes the auxiliary exhaust hole 1a. The pressure ratio in the compressor decreases, and the volume ratio of the compressor changes accordingly to meet the operational needs of the compressor, thereby effectively preventing over compression in the scroll compression chamber.

In the conventional technology, the pressure relief valve 8 of the scroll compressor is arranged on the fix scroll 1, and an upper part of the fix scroll 1 is located in the exhaust chamber 70. The pressure in the exhaust chamber 70 directly applies on the fix scroll 1, which can easily cause deformation of the scroll blade of the fix scroll 1, affecting the performance of the fix scroll 1.

Compared to the above, in the scroll compressor of the present disclosure, the pressure relief valve 8 is arranged on the pressure partition plate 6, and the high pressure in the exhaust chamber 70 directly applies on the pressure partition plate 6, rather than directly applying the fix scroll 1, thereby reducing the action force on the fix scroll 1 and in turn reducing the risk of deformation of the scroll blade of the fix scroll 1, thus ensuring the service life, performance, and reliability of the fix scroll.

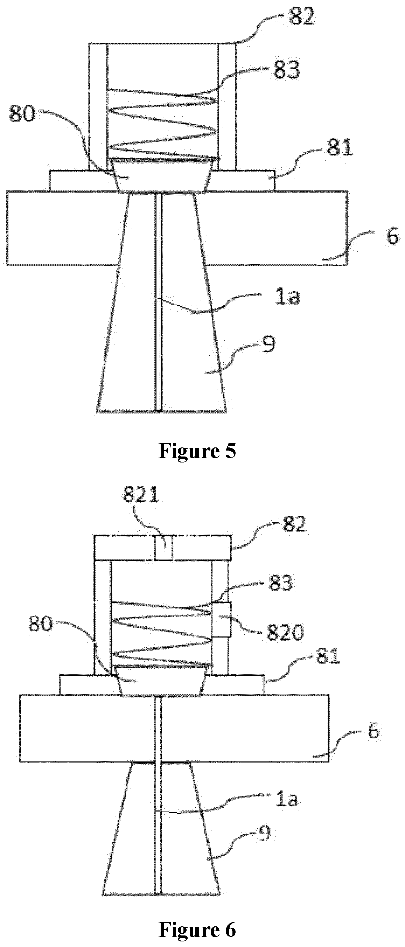

In detail, in an embodiment, referring to Figures 4 and 5, the scroll compressor includes a connecting piece 9, which is provided with an auxiliary exhaust hole 1a. The auxiliary exhaust hole 1a of the connecting piece 9 is connected with the compression chamber, and the connecting piece 9 passes through the pressure partition plate 6 and connects with the exhaust chamber 70.

The pressure relief valve 8 is configured to open or close the auxiliary exhaust hole 1a of the connecting piece 9 based on a relationship between the pressure in the compression chamber and the exhaust pressure.

In this way, it is unnecessary to provide the auxiliary exhaust hole 1a on the pressure partition plate 6, only a through hole that may be used for the connecting piece 9 to pass through is provided on the pressure partition plate 6. The size of the through hole is generally larger than that of the auxiliary exhaust hole 1a, thus reducing the difficulty of manufacturing the upper cap 7.

In an embodiment, the connecting piece 9 may be integrally formed with the fix scroll 1, that is, a cylindrical structure is formed on the fix scroll 1 to pass through the pressure partition plate 6, and an auxiliary exhaust hole 1a is formed on the integrally formed structure of the connecting piece 9 and the fix scroll 1 to connect the compression chamber with the exhaust chamber 70.

Further, the connecting piece 9 and the fix scroll 1 of the scroll compressor in the present disclosure are formed independently, and the auxiliary exhaust holes 1a are formed on both of the connecting piece 9 and the fix scroll 1. Then, the connecting piece 9 and the fix scroll 1 are assembled together by welding, bonding, bolt connection, or other ways, and the auxiliary exhaust holes 1a of the connecting piece 9 and the fix scroll 1 are connected with each other, preferably, in a coaxial manner.

Compared with the above structure, the connecting piece 9 and the fix scroll 1 of the scroll compressor of the present disclosure are integrally formed, which not only reduces the number of components in the scroll compressor, but also directly eliminates the steps of independent manufacturing and assembling by integrally forming the auxiliary exhaust hole 1a on the connecting piece 9 and the fix scroll 1, thereby reducing the difficulty of manufacturing and assembling the overall structure.

Continually referring to Figure 5, in an embodiment, the pressure relief valve 8 of the present disclosure includes a pressure relief washer 80, a pressure relief valve plate 81, a pressure relief valve back plate 82, and a reset spring 83. The pressure relief valve plate 81 is arranged on the pressure partition plate 6 by welding, threaded connection, bonding, or other ways and has a through hole. The auxiliary exhaust hole 1a of the connecting piece 9 is connected with the exhaust chamber 70 through the through hole. The pressure relief valve back plate 82 is fixedly connected to the pressure relief valve plate 81, and the reset spring 83 is pre-compressed between the pressure relief valve back plate 82 and the pressure relief washer 80.

The pressure relief washer 80 is configured to overcome an elastic force of the reset spring 83 in a case that the pressure in the compression chamber exceeds the exhaust pressure, to connect the compression chamber with the exhaust chamber 70 to discharge the gas in the compression chamber into the exhaust valve 5 until the pressure in the compression chamber decreases to or below the exhaust pressure.

That is, in a case that the pressure in the compression chamber does not exceed the exhaust pressure, the pressure relief washer 80 closes the through hole of the pressure relief valve plate 81 under the elastic force of the reset spring 83, that is, closes the exhaust path that connects the compression chamber with the exhaust chamber 70 through the auxiliary exhaust hole 1a.

In an embodiment, the reset spring 83 may be a compression spring or an elastic component that may store elastic potential energy after being compressed, such as a rubber component.

In an embodiment, the pressure relief valve plate 81 may be integrally formed with the pressure partition plate 6.

With the above arrangement, the number of components involved in the scroll compressor of the present disclosure can be reduced, reducing the difficulty of manufacturing and assembling.

That is, the pressure relief valve back plate 82 may be directly fixedly connected to the pressure partition plate 6. In a case that the pressure in the compression chamber does not exceed the exhaust pressure, the pressure relief washer 80 is compressed by the reset spring 83 on the auxiliary exhaust hole 1a of the connecting piece 9. In a case that the pressure in the compression chamber exceeds the exhaust pressure, under the action of the internal and external pressure difference, the pressure relief washer 80 overcomes the elastic force of the reset spring 83 to open the auxiliary exhaust hole 1a of the connecting piece 9, so that the compression chamber and the exhaust chamber 70 are connected with each other through the auxiliary exhaust hole 1a, and the scroll compressor begins to release pressure.

Referring to Figure 6, in an embodiment, the scroll compressor includes a connecting piece 9, which is provided with an auxiliary exhaust hole 1a. The auxiliary exhaust hole 1a of the connecting piece 9 is connected with the auxiliary exhaust hole 1a of the fix scroll 1 and the auxiliary exhaust hole 1a of the pressure partition plate 6. The auxiliary exhaust hole 1a of the fix scroll 1 is connected with the compression chamber, and the auxiliary exhaust hole 1a of the pressure partition plate 6 is connected with the exhaust chamber 70.

The pressure relief valve 8 is configured to open or close the auxiliary exhaust hole 1a of the pressure partition plate 6 based on a relationship between the pressure in the compression chamber and the exhaust pressure.

In a case that the pressure in the compression chamber exceeds the exhaust pressure, the pressure relief valve 8 opens the auxiliary exhaust hole 1a of the pressure partition plate 6. That is, the compression chamber and the exhaust chamber 70 are connected with each other through the auxiliary exhaust hole 1a of the fix scroll 1, the auxiliary exhaust hole 1a of the connecting piece 9, and the auxiliary exhaust hole 1a of the pressure partition plate 6 in sequence, to quickly release the pressure in the compression chamber into the exhaust chamber 70 to release the pressure, and in a case that the pressure in the compression chamber does not exceed the exhaust pressure, the pressure relief valve closes the auxiliary exhaust hole 1a of the pressure partition plate 6, and the pressure relief is completed.

It should be noted that in this embodiment, the connecting piece 9, the fix scroll 1, and the pressure partition plate 6 are independently formed and then assembled together, and the auxiliary exhaust holes 1a of the connecting piece 9, the fix scroll 1, and the pressure partition plate 6 are connected with each other.

It can be understood that the connecting piece 9 may be integrated with the pressure partition plate 6 to reduce the number of components involved in the scroll compressor of the present disclosure, thereby reducing the difficulty of manufacturing and assembling.

Continually referring to Figure 6, in this embodiment, the pressure relief valve 8 of the present disclosure includes a pressure relief washer 80, a pressure relief valve plate 81, a pressure relief valve back plate 82, and a reset spring 83. The pressure relief valve plate 81 is arranged on the pressure partition plate 6 by welding, threaded connection, bonding, or other ways and has a through hole. The auxiliary exhaust hole 1a of the pressure partition plate 6 is connected with the exhaust chamber 70 through the through hole. The pressure relief valve back plate 82 is fixedly connected to the pressure relief valve plate 81, and the reset spring 83 is pre-compressed between the pressure relief valve back plate 82 and the pressure relief washer 80. The pressure relief washer 80 is configured to overcome the elastic force of the reset spring 83 to connect the compression chamber with the exhaust chamber 70 in a case that the pressure in the compression chamber exceeds the exhaust pressure, to discharge the gas in the compression chamber into the exhaust valve 5 until the pressure in the compression chamber decreases to or below the exhaust pressure.

That is, in a case that the pressure in the compression chamber does not exceed the exhaust pressure, the pressure relief washer 80 closes the through hole of the pressure relief valve plate 81 under the elastic force of the reset spring 83, that is, closes the exhaust path that connects the compression chamber with the exhaust chamber 70 through the auxiliary exhaust hole 1a.

**In** an embodiment, the reset spring 83 may be a compression spring or an elastic component that can store elastic potential energy after being compressed, such as a rubber component.

**In** an embodiment, the pressure relief valve plate 81 may be integrally formed with the pressure partition plate 6, as shown in the structure in Figure 4.

With this arrangement, the number of components involved in the scroll compressor of the present disclosure can be reduced, thereby reducing the difficulty of manufacturing and assembling.

That is, the pressure relief valve back plate 82 may be directly fixedly connected to the pressure partition plate 6. In a case that the pressure in the compression chamber does not exceed the exhaust pressure, the pressure relief washer 80 is compressed by the reset spring 83 onto the auxiliary exhaust hole 1a on the pressure partition plate 6. In a case that the pressure in the compression chamber exceeds the exhaust pressure, under the action of the internal and external pressure difference, the pressure relief washer 80 overcomes the elastic force of the reset spring 83 to open the auxiliary exhaust hole 1a of the pressure partition plate 6, so that the compression chamber and the exhaust chamber 70 are connected with each other through the auxiliary exhaust hole 1a. The scroll compressor begins to release pressure until the pressure in the compression chamber does not exceed the exhaust pressure, and then the pressure relief washer 80 closes the auxiliary exhaust hole 1a on the pressure partition plate 6, thus the pressure relief is completed.

Further, in order to ensure the smooth reset of the pressure relief washer 80, continually referring to Figure 6, the pressure relief valve back plate 82 of the present disclosure is also provided with a reset hole 821 connected with the exhaust chamber 70, and the reset hole 821 is configured to guide the pressure in the exhaust chamber 70 to the pressure relief washer 80 in a case that the pressure in the compression chamber does not exceed the exhaust pressure, so as to reset the pressure relief washer 80.

That is, in this embodiment, the pressure relief washer 80 may be reset through the action of both the reset spring 83 and the pressure from the reset hole 821.

With this arrangement, the problem of unable to reset due to the reset spring 83 failing or the pressure relief washer 80 being stuck on the pressure relief valve back plate 82 can be avoided, thereby avoiding the problem of airflow of the exhaust chamber 70 flowing back into the compression chamber during the compression, intake and other operating strokes of the scroll compressor, thus ensuring the normal and safe operation of the compressor.

In detail, in this embodiment, the reset hole 821 is provided on the pressure relief valve back plate 82 at a side opposite to the pressure relief washer 80, that is, on a top plate of the pressure relief valve back plate 82, so that the air pressure introduced into the exhaust chamber 70 can be fully applied on the pressure relief washer 80 and the pressure relief washer 80 can be reset quickly.

Moreover, in order to release the pressure in the compression chamber to the exhaust chamber 70 under the pressure relief condition, in this embodiment, the pressure relief exhaust hole 820 of the pressure relief valve back plate 82 is arranged on a side plate of the pressure relief valve back plate 82, preferably within the minimum stroke range of the pressure relief washer 80.

It should be noted that the solution of arranging a reset hole 821 on the pressure relief valve back plate 82 in this embodiment is also applicable to the embodiment shown in Figure 5, which can be fully understand and implemented based on the above description by those skilled in the art, and will not be repeated here.

However, in the embodiments shown in Figures 5 and 6, the pressure relief valve 8 of the present disclosure may only include a pressure relief washer 80, which may be an elastic plate fixed to the pressure partition plate 6 by bolt connection or other ways and can block the auxiliary exhaust hole 1a of the pressure partition plate 6 or the connecting piece 9 under an action of its own elastic potential energy. In a case that the pressure in the compression chamber exceeds the exhaust pressure, the pressure relief washer 80 overcomes the resistance of its own elastic potential energy and deforms away from the pressure partition plate 6 under the action of the internal and external pressure difference, so that the auxiliary exhaust hole 1a of the pressure partition plate 6 is connected with the exhaust chamber 70, and the compression chamber is connected with the exhaust chamber 70, thus pressure relief is started. In a case that the pressure in the compression chamber decreases to no longer exceed the exhaust pressure, the internal and external pressure difference decreases, and the pressure relief washer 80 resets under the action of its own elastic potential energy to block the auxiliary exhaust hole 1a again, so that the compression chamber is not connected with the exhaust chamber 70, thus the pressure relief is completed.

It can be understood that this pressure relief valve has a simple structure and is easy to implement. This pressure relief valve achieve the purpose of blocking the auxiliary exhaust hole 1a by using its own elastic potential energy. However, this pressure relief washer 80 may be provided with a pressure relief valve plate 81, while components such as the reset spring 83 and the pressure relief valve back plate 82 are not required.

Various embodiments of the present disclosure have been described above, and the foregoing description is exemplary and not exhaustive, and is not limited to the disclosed embodiments.

## Claims

1. A scroll compressor, comprising:
a fix scroll (1);
an orbiting scroll (2), configured to cooperate with the fix scroll (1) to form a compression chamber with a variable volume;
a pressure partition plate (6), arranged on the fix scroll (1);
an upper cap (7), connected to the pressure partition plate (6) to form an exhaust chamber (70); and
a pressure relief valve (8), arranged on the pressure partition plate (6) and configured to connect the compression chamber with the exhaust chamber (70) in a case that a pressure in the compression chamber exceeds an exhaust pressure,
**characterized in that**
the pressure relief valve (8) comprises a pressure relief valve back plate (82), a pressure relief washer (80), and a reset spring (83) pre-compressed between the pressure relief valve back plate (82) and the pressure relief washer (80); and
the pressure relief washer (80) is configured to overcome an elastic force of the reset spring (83) to connect the compression chamber with the exhaust chamber (70) in a case that the pressure in the compression chamber exceeds the exhaust pressure,
wherein the pressure relief valve back plate (82) is further provided with a reset hole (821) connected with the exhaust chamber (70), and the reset hole (821) is configured to guide the pressure in the exhaust chamber (70) to the pressure relief washer (80) in a case that the pressure in the compression chamber does not exceed the exhaust pressure, to reset the pressure relief washer (80).

2. The scroll compressor according to claim 1, further comprising a connecting piece (9), wherein the connecting piece (9) is provided with an auxiliary exhaust hole (1a), and the auxiliary exhaust hole (1a) of the connecting piece (9) is connected with the compression chamber, and the connecting piece (9) passes through the pressure partition plate (6) and is connected with the exhaust chamber (70); and
the pressure relief valve (8) is configured to open or close the auxiliary exhaust hole (1a) of the connecting piece (9) based on a relationship between the pressure in the compression chamber and the exhaust pressure.

3. The scroll compressor according to claim 2, wherein the pressure relief washer (80) is configured to open the auxiliary exhaust hole (1a) of the connecting piece (9) in a case that the pressure in the compression chamber exceeds the exhaust pressure, and close the auxiliary exhaust hole (1a) of the connecting piece (9) in a case that the pressure in the compression chamber does not exceed the exhaust pressure.

4. The scroll compressor according to claim 3, wherein the pressure relief valve (8) further comprises a pressure relief valve plate (81), the pressure relief valve plate (81) is arranged on the pressure partition plate (6) and has a through hole, the auxiliary exhaust hole (1a) is connected with the exhaust chamber (70) through the through hole, and the pressure relief washer (80) is configured to open or close the through hole.

5. The scroll compressor according to claim 4, wherein the pressure relief valve plate (81) is integrally formed with the pressure partition plate (6).

6. The scroll compressor according to claim 2, wherein the connecting piece (9) is integrally formed with the fix scroll (1).

7. The scroll compressor according to claim 1, further comprising:
a connecting piece (9), provided with an auxiliary exhaust hole (1a), wherein the auxiliary exhaust hole (1a) of the connecting piece (9) is configured to connect an auxiliary exhaust hole (1a) of the fix scroll (1) with the auxiliary exhaust hole (1a) of the pressure partition plate (6), the auxiliary exhaust hole (1a) of the fix scroll (1) is connected to the compression chamber, and the auxiliary exhaust hole (1a) of the pressure partition plate (6) is connected with the exhaust chamber (70), and
the pressure relief valve (8) is configured to open or close the auxiliary exhaust hole (1a) of the pressure partition plate (6) based on a relationship between the pressure in the compression chamber and the exhaust pressure.

8. The scroll compressor according to claim 7, wherein the connecting piece (9) is integrally formed with the fix scroll (1) or the pressure partition plate (6).

## Patentansprüche

1. Spiralverdichter, der aufweist:
eine feststehende Spirale (1);
eine umlaufende Spirale (2), die dazu ausgebildet ist, mit der feststehenden Spirale (1) zusammenzuwirken, um eine Verdichtungskammer mit einem veränderlichen Volumen zu bilden;
eine Drucktrennplatte (6), die auf der feststehenden Spirale (1) angeordnet ist;
eine obere Kappe (7), die mit der Drucktrennplatte (6) verbunden ist, um eine Auslasskammer (70) zu bilden; und
ein Druckentlastungsventil (8), das an der Drucktrennplatte (6) angeordnet und dazu ausgebildet ist, die Verdichtungskammer mit der Auslasskammer (70) zu verbinden, falls ein Druck in der Verdichtungskammer einen Auslassdruck überschreitet,
**dadurch gekennzeichnet, dass**
das Druckentlastungsventil (8) eine Druckentlastungsventil-Rückplatte (82), eine Druckentlastungsscheibe (80) und eine Rückstellfeder (83), die zwischen der Druckentlastungsventil-Rückplatte (82) und der Druckentlastungsscheibe (80) vorgespannt ist, aufweist; und
die Druckentlastungsscheibe (80) dazu ausgebildet ist, eine elastische Kraft der Rückstellfeder (83) zu überwinden, um die Verdichtungskammer mit der Auslasskammer (70) zu verbinden, falls der Druck in der Verdichtungskammer den Auslassdruck übersteigt,
wobei die Druckentlastungsventil-Rückplatte (82) weiterhin mit einer mit der Auslasskammer (70) verbundenen Rückstellöffnung (821) versehen ist und die Rückstellöffnung (821) dazu ausgebildet ist, den Druck in der Auslasskammer (70) zu der Druckentlastungsscheibe (80) zu leiten, falls der Druck in der Verdichtungskammer den Auslassdruck nicht überschreitet, um die Druckentlastungsscheibe (80) zurückzustellen.

2. Der Spiralverdichter nach Anspruch 1, der weiterhin ein Anschlussstück (9) aufweist, wobei das Anschlussstück (9) mit einer Hilfsauslassöffnung (1a) versehen ist und die Hilfsauslassöffnung (1a) des Anschlussstücks (9) mit der Verdichtungskammer verbunden ist und das Anschlussstück (9) die Drucktrennplatte (6) durchquert und mit der Auslasskammer (70) verbunden ist; und
das Druckentlastungsventil (8) dazu ausgebildet ist, die Hilfsauslassöffnung (1a) des Anschlussstücks (9) basierend auf einer Beziehung zwischen dem Druck in der Verdichtungskammer und dem Auslassdruck zu öffnen oder zu schließen.

3. Spiralverdichter nach Anspruch 2, wobei die Druckentlastungsscheibe (80) dazu ausgebildet ist, die Hilfsauslassöffnung (1a) des Anschlussstücks (9) zu öffnen, falls der Druck in der Verdichtungskammer den Auslassdruck überschreitet, und die Hilfsauslassöffnung (1a) des Anschlussstücks (9) zu schließen, falls der Druck in der Verdichtungskammer den Auslassdruck nicht überschreitet.

4. Spiralverdichter nach Anspruch 3, wobei das Druckentlastungsventil (8) weiterhin eine Druckentlastungsventilplatte (81) aufweist, die Druckentlastungsventilplatte (81) auf der Drucktrennplatte (6) angeordnet ist und ein Durchgangsloch aufweist, die Hilfsauslassöffnung (1a) über das Durchgangsloch mit der Auslasskammer (70) verbunden ist und die Druckentlastungsscheibe (80) dazu ausgebildet ist, das Durchgangsloch zu öffnen oder zu schließen.

5. Spiralverdichter nach Anspruch 4, wobei die Druckentlastungsventilplatte (81) einstückig mit der Drucktrennplatte (6) gebildet ist.

6. Spiralverdichter nach Anspruch 2, wobei das Anschlussstück (9) einstückig mit der feststehenden Spirale (1) gebildet ist.

7. Spiralverdichter nach Anspruch 1, der weiterhin aufweist:
ein Anschlussstück (9), das mit einer Hilfsauslassöffnung (1a) versehen ist, wobei die Hilfsauslassöffnung (1a) des Anschlussstücks (9) dazu ausgebildet ist, eine Hilfsauslassöffnung (1a) der feststehenden Spirale (1) mit der Hilfsauslassöffnung (1a) der Drucktrennplatte (6) zu verbinden, die Hilfsauslassöffnung (1a) der feststehenden Spirale (1) mit der Verdichtungskammer verbunden ist, und die Hilfsauslassöffnung (1a) der Drucktrennplatte (6) mit der Auslasskammer (70) verbunden ist, und
das Druckentlastungsventil (8) dazu ausgebildet ist, die Hilfsauslassöffnung (1a) der Drucktrennplatte (6) basierend auf einer Beziehung zwischen dem Druck in der Verdichtungskammer und dem Auslassdruck zu öffnen oder zu schließen.

8. Spiralverdichter nach Anspruch 7, wobei das Anschlussstück (9) einstückig mit der feststehenden Spirale (1) oder der Drucktrennplatte (6) gebildet ist.

## Revendications

1. Un compresseur à spirale, comprenant :
une spirale (1) fixe ;
une spirale (2) orbitale, configurée pour coopérer avec la spirale (1) fixe afin de former une chambre de compression de volume variable ;
une plaque (6) de partition de la pression, montée sur la spirale (1) fixe ;
une coiffe (7) supérieure, reliée à la plaque (6) de partition de la pression afin de former une chambre (70) d'évacuation ; et
une soupape (8) de décompression, montée sur la plaque (6) de partition de la pression et configurée pour mettre la chambre de compression en contact avec la chambre (70) d'évacuation dans le cas où une pression dans la chambre de compression dépasse une pression d'évacuation ;
**caractérisé en ce que**
la soupape (8) de décompression comprend une plaque (82) arrière de soupape de décompression, une rondelle (80) de décompression et un ressort (83) de remise à l'état initial précomprimé entre la plaque (82) arrière de la soupape de décompression et la rondelle (80) de décompression ; et
la rondelle (80) de décompression est configurée pour surmonter une force élastique du ressort (83) de remise à l'état initial afin de mettre la chambre de compression en communication avec la chambre (70) d'évacuation dans le cas où la pression dans la chambre de compression dépasse la pression d'évacuation,
dans lequel la plaque (82) arrière de la soupape de décompression est pourvue en outre d'un trou (821) de remise à l'état initial communiquant avec la chambre (70) d'évacuation et le trou (821) de remise à l'état initial est configuré pour faire passer la pression dans la chambre (70) d'évacuation à la rondelle (80) de décompression dans le cas où la pression dans la chambre de compression n'excède pas la pression d'évacuation afin de remettre à l'état initial la rondelle (80) de décompression.

2. Le compresseur à spirale suivant la revendication 1, comprenant en outre une pièce (9) de communication, dans lequel la pièce (9) de communication est pourvue d'un trou (1a) auxiliaire d'évacuation et le trou (1a) d'auxiliaire d'évacuation de la pièce (9) de communication communique avec la chambre de compression, et la pièce (9) de communication traverse la plaque (6) de partition de pression et communique avec la chambre (70) d'évacuation ; et
la soupape (8) de décompression est configurée pour ouvrir ou fermer le trou (1a) auxiliaire d'évacuation de la pièce (9) de communication sur la base d'une relation entre la pression dans la chambre de compression et la chambre d'évacuation.

3. Le compresseur à spirale suivant la revendication 2, dans lequel la rondelle (80) de décompression est configurée pour ouvrir le trou (1a) auxiliaire d'évacuation de la pièce (9) de communication dans le cas où la pression dans la chambre de compression dépasse la pression d'évacuation, et pour fermer le trou (1a) auxiliaire d'évacuation de la pièce (9) de communication dans le cas où la pression dans la chambre de compression n'excède pas la pression d'évacuation.

4. Le compresseur à spirale suivant la revendication 3, dans lequel la soupape (8) de décompression comprend en outre une plaque (81) de soupape de décompression, la plaque (81) de soupape de décompression est montée sur la plaque (6) de partition de pression et a un trou traversant le trou (1a) auxiliaire d'évacuation, et communique avec la chambre (70) d'évacuation en passant par le trou traversant, et la rondelle (80) de décompression est configurée pour ouvrir ou fermer le trou traversant.

5. Le compresseur à spirale suivant la revendication 4, dans lequel la plaque (81) de la soupape de décompression est formée d'une pièce avec la plaque (6) de partition de la pression.

6. Le compresseur à spirale suivant la revendication 2, dans lequel la pièce (9) de communication est formée d'une pièce avec la spirale (1) fixe.

7. Le compresseur à spirale suivant la revendication 1, comprenant en outre :
une pièce (9) de communication pourvue d'un trou (1a) auxiliaire d'évacuation, dans lequel le trou (1a) auxiliaire d'évacuation de la pièce (9) de communication est configuré pour mettre un trou (1a) auxiliaire de la spirale (1) fixe en communication avec le trou (1a) auxiliaire d'évacuation de la plaque (6) de partition de la pression, le trou (1a) auxiliaire d'évacuation de la spirale (1) fixe communique avec la chambre de compression et le trou (1a) auxiliaire d'évacuation de la plaque (6) de partition de la pression communique avec la chambre (70) d'évacuation, et
la soupape (8) de décompression est configurée pour ouvrir ou fermer le trou (1a) auxiliaire d'évacuation de la plaque (6) de partition de la pression sur la base d'une relation entre la pression de la chambre de compression et la pression d'évacuation.

8. Le compresseur à spirale suivant la revendication 7, dans lequel la pièce (9) de communication est formée d'une pièce avec la spirale (1) fixe ou avec la plaque (6) de partition de la pression.
